# EUROPÄISCHE PATENTANMELDUNG

(11) **EP 1 705 414 A1**
(43) Veröffentlichungstag der Anmeldung: **27.09.2006**
(21) Anmeldenummer: 05026627.9
(22) Anmeldetag: 06.12.2005
(51) Int. Cl.: F16L 13/10, F16L 33/34, F16L 47/02, B29C 65/48, B29C 65/54

(54) **Anordnung mit einem rohrförmigen Element**

(30) Priorität: 24.03.2005 DE 102005013859
(71) Anmelder: VERITAS AG, 63571 Gelnhausen (DE)
(72) Erfinder: Pascuzzi, Sergio, 64347 Griesheim (DE); Rösch, Thomas, 63589 Linsengericht-Grossenhausen (DE); Poeppel, Artur, 63571 Gelnhausen (DE)
(74) Vertreter: Grünecker, Kinkeldey, Stockmair & Schwanhäusser Anwaltssozietät

(57) **Zusammenfassung**

Die Erfindung bezieht sich auf eine Anordnung (1) mit einem rohrförmigen Element (4), vorzugsweise einer Rohrleitung oder einem Schlauch, und einer Kupplungseinrichtung (2), die einen rohrförmigen Abschnitt (5) aufweist, dessen Innendurchmesser größer als der Außendurchmesser des rohrförmigen Elements (4) ist, und bei der das rohrförmige Element (4) abschnittsweise in dem rohrförmigen Abschnitt (5) angeordnet ist. Um eine derartige Anordnung (1) zu verbessern ist erfindungsgemäß vorgesehen, dass zwischen dem rohrförmigen Element (4) und dem rohrförmigen Abschnitt (5) ein vorgefertigtes vorzugsweise ringförmiges Klebeelement (3) im Wesentlichen aus aufschmelzbaren Klebstoff angeordnet ist.

## Beschreibung

Die vorliegende Erfindung bezieht sich auf eine Anordnung mit einem rohrförmigen Ele-ment, vorzugsweise einer Rohrleitung oder einem Schlauch, und einer Kupplungseinrichtung, die einen rohrförmigen Abschnitt aufweist, dessen einer Innendurchmesser größer als der Außendurchmesser des rohrförmigen Elements ist und bei der das rohrförmige Element abschnittsweise in dem rohrförmigen Abschnitt angeordnet ist.

Eine derartige Anordnung ist z. B. aus der DE 19945218 bekannt. Dort ist ein Kupplungsteil beschrieben, das einen äußeren rohrförmigen Abschnitt und einen inneren Kupplungsstutzen aufweist. Zwischen dem äußeren rohrförmigen Abschnitt und dem Kupplungsstutzen wird ein Raum gebildet, in dem konzentrisch ein Endabschnitt einer Fluidleitung angeordnet ist. Die Fluidleitung ist auf den Kupplungsstutzen aufgeschoben. Um eine feste Verbindung zwischen der Rohrleitung und dem Kupplungsteil zu erzeugen, ist vorgesehen, vor dem Aufschieben der Rohrleitung auf den Rohrstutzen, zunächst einen Ring aus einem festen verpressten, aufschmelzbaren Klebstoff einzubringen, der im Wesentlichen den Raum zwischen dem äußeren rohrförmigen Abschnitt und dem Kupplungsstutzen auffüllt. Zur Montage der Rohrleitung im Kupplungsteil wird der Klebstoff aufgeschmolzen, während die Rohrleitung auf den Kupplungsstutzen aufgeschoben wird. Bei der Montage stößt dabei das stirnseitige Ende der Rohrleitung auf den Klebstoff und verdrängt diesen, so dass nach vollständig auf den Kupplungsstutzen aufgeschobene Rohrleitung der Klebstoff in den verbleibenden Spalt zwischen Rohrleitung und dem äußeren rohrförmigen Abschnitt gedrängt wird.

Durch das Verdrängen des Klebstoffs während des Einführens der Rohrleitung bei gleichzeitiger Erwärmung des Klebstoffs führt zu heftigen Bewegungen innerhalb des Klebstoffs. Darüber hinaus kann nicht ausgeschlossen werden, dass je nach Lage der Toleranzen von Rohrleitung, Kupplungsstutzen und dem rohrförmigen äußeren Abschnitt und der sich daraus ergebenden Druckverhältnisse Klebstoff aus der Verbindung unter Druck herausfließt. Ebenso sind Lufteinschlüsse zu befürchten.

Die Aufgabe der Erfindung ist daher, eine Anordnung der eingangs genannten Art derart zu verbessern, dass die Nachteile aus dem Stand der Technik überwunden werden.

Die Aufgabe wird erfindungsgemäß dadurch gelöst, dass zwischen dem rohrförmigen Element und dem rohrförmigen Abschnitt ein vorgeformtes vorzugsweise ringförmiges Klebeelement im Wesentlichen aus aufschmelzbaren, Klebstoff angeordnet ist.

Diese Lösung ist einfach und hat den Vorteil, dass zunächst die Rohrleitung in den Raum innerhalb des rohrförmigen Abschnitts eingebracht wird und das ringförmige Klebeelement entweder vor dem Einbringen der Rohrleitung oder nach dem Einbringen der Rohrleitung zwischen Rohrleitung und dem rohrförmigen Abschnitt angeordnet wird. Durch diese Anordnung ist nunmehr möglich, den Klebstoff aufzuschmelzen in einem Zustand, wo die Bauteile bereits zueinander ausgerichtet sind. Auf diese Weise werden heftige Bewegungen des Klebstoffs während des Verbindungsvorganges zwischen Rohrleitung und Kupplungseinrichtung vermieden. Dadurch, dass das ringförmige Klebeelement aus aufschmelzbarem Klebstoff besteht, ist es auch möglich, die Einzelteile, nämlich Rohrleitung, Kupplungseinrichtung und Klebeelement, vorzukonfektionieren und die eigentliche Verbindung erst dann vorzunehmen, wenn die endgültige Einbausituation vorliegt, und z. B. die Teile gegeneinander ausgerichtet sind. Auf diese Weise können insbesondere radiale Toleranzen ausgeglichen werden, die sich aufgrund der tatsächlichen Einbausituation ergeben. Der Klebstoff kann sich dann an die jeweilige Einbausituation problemlos anpassen.

In einer vorteilhaften Weiterbildung kann das Klebeelement aus gepresstem Klebstoff bestehen. Dadurch lässt sich das Klebeelement maßgenau herstellen und einfach montieren.

In einer vorteilhaften Weiterbildung der Erfindung kann die Kupplungseinrichtung einen sich im Wesentlichen radial erstreckenden Anlageabschnitt aufweisen, an dem das Klebeelement in Achsrichtung des rohrförmigen Abschnitts anliegt. Dadurch lässt sich ein Kleberaum definieren, der durch den rohrförmigen Abschnitt und den radial sich erstreckenden Abschnitt begrenzt wird. Auch kann dadurch eine Montage vereinfacht werden.

Das rohrförmige Element kann dann an dem Anlageadschnitt anliegen, um die Positionierung vorzunehmen.

Zudem kann es sich als vorteilhaft erweisen, wenn der Innendurchmesser des rohrförmigen Abschnitts geringfügig größer als der Außendurchmesser des Klebeelements ist. Dadurch kann die Montage des Klebeelements vereinfacht werden. Dabei kann es sich ebenfalls als günstig erweisen, wenn der Innendurchmesser des Klebeelements geringfügig größer als der Außendurchmesser des rohrförmigen Elements ist. Auch dadurch kann erreicht werden, dass das Klebeelement problemlos in den Raum zwischen dem rohrförmigen Element und dem rohrförmigen Abschnitt eingebracht werden kann.

Ferner kann es sich dabei als vorteilhaft erweisen, wenn das Klebeelement im Wesentlichen zylinderringförmig ist. Auch dadurch kann die Montage erleichtert werden.

Eine Vereinfachung der Montage lässt sich auch erzielen, wenn das Klebeelement einen wärmeschmelzbaren Klebstoff aufweist.

Um eine weitere Verbesserung der Verklebung zwischen Kupplungseinrichtung und rohrförmigen Element zu erhalten, kann vorgesehen sein, dass das Klebeelement einen sich zumindest abschnittsweise radial nach innen erstreckenden Abschnitt aufweist. Dann kann es sich als günstig erweisen, wenn das rohrförmige Element stirnseitig wenigstens abschnittsweise an dem sich radial nach innen erstreckenden Abschnitt anliegt. Bei dieser Ausführungsform ist es jedoch erforderlich, dass zunächst das Klebeelement montiert wird, bevor das rohrförmige Element eingebracht wird. Andererseits kann der stirnseitige Kontakt des rohrförmigen Elements mit dem Klebstoff und darüber hinaus der Kontakt zwischen Klebstoff und Kupplungseinrichtung die Verklebung verbessern.

In einer vorteilhaften Weiterbildung kann die Kupplungseinrichtung einen Kupplungsstutzen aufweisen, der sich abschnittsweise in das rohrförmige Element hinein erstreckt. Auch dadurch lässt sich die Verbindung zwischen der Kupplungseinrichtung und dem rohrförmigen Element verbessern.

Der kupplungsstutzen kann dabei durch eine in dem sich radial erstreckenden Abschnitt der Kupplungseinrichtung angeordnete ringförmig verlaufende Nut gebildet sein. Auf diese Weise lässt sich einfach und kostengünstig ein Kupplungsstutzen verwirklichen.

Um ein Herausfließen des Klebstoffs aus der Verbindung zwischen Kupplungseinrichtung und rohrförmigen Element zu verhindern, kann die axiale Länge des Klebeelements geringer als die axiale Länge des rohrförmigen Abschnitts sein.

Weiter kann es sich als vorteilhaft erweisen, wenn das Klebeelement und das rohrförmige Element aus Kunststoff bestehen bzw. Kunststoff, vorzugsweise einen polymeren Kunststoff aufweisen. Dadurch lässt sich eine sehr stabile Klebeverbindung erreichen. Besonders vorteilhaft kann es dabei sein, wenn das Klebeelement und das rohrförmige Element aus dem gleichen Kunststoff bestehen. Ebenso kann es sich als günstig erweisen, wenn das Klebeelement, das rohrförmig Element und das Kupplungselement zumindest bereichsweise den gleichen Kunststoff aufweisen.

Ferner kann der Klebstoff elektrisch leitende Partikel aufweisen. Dadurch kann der Klebstoff z. B. durch Induktion aufgeschmolzen werden. Darüber hinaus ist es denkbar, auch das Kupplungselement und / oder die Rohrleitung, wie auch das Klebeelement elektrisch leitend auszuführen. Auf diese Weise kann eine elektrisch leitende Verbindung zwischen der Kupplungseinrichtung, dem rohrförmigen Element und dem Klebstoff nach der Montage gewährleistet werden.

Weiterhin wird ein Verfahren zum Herstellen einer Verbindung einer Anordnung nach einem der vorangegangenen Ansprüche beansprucht, bei dem zunächst das gepressten aufschmelzbaren Klebstoff aufweisenden Klebeelement und das rohrförmige Element in den rohrförmigen Abschnitt eingebracht und anschließend der Klebstoff aufgeschmolzen wird.

Durch dieses Verfahren lassen sich, wie auch durch Anspruch 1 die erfindungsgemäßen Vorteile erzielen. Insbesondere ermöglicht diese Vorgehensweise ein endgültiges Verbinden von rohrförmigen Element und Kupplungseinrichtung in der tatsächlichen Einbausituation und dadurch den Ausgleich von radialen Toleranzen der Einbaulagen von Kuoolunoseinrichtuna und rohrförmioem Element.

Zudem kann es sich als günstig erweisen, wenn das rohrförmige Element und die Kupplungseinrichtung vor dem Aufschmelzen des Klebstoffs zueinander ausgerichtet werden.

Weiterhin kann es sich als günstig erweisen, wenn während des Aufschmelzens das rohrförmige Element im Wesentlichen senkrecht nach oben ragt. Dadurch kann ein gleichmäßiges Herumfließen des Klebstoffs um das rohrförmige Element erreicht werden.

Ferner kann es sich als vorteilhaft erweisen, wenn vor dem Aufschieben des Klebeelements das rohrförmige Element auf den Kupplungsstutzen aufgesteckt wird.

Nachfolgend wird die Wirkungsfunktionsweise der Erfindung anhand von Ausführungsbeispielen näher erläutert.

Es zeigen:
- Fig. 1: die erfindungsgemäße Anordnung vor der Montage;
- Fig. 2: die erfindungsgemäße Anordnung aus Fig. 1 nach der Montage;
- Fig. 3: eine zweite Ausführungsform der erfindungsgemäßen Anordnung vor der Mon-tage;
- Fig. 4: die Anordnung aus Fig. 3 nach der Montage;
- Fig. 5: eine dritte Ausführungsform der erfindungsgemäßen Anordnung vor der Monta-ge;
- Fig. 6: die Anordnung aus Fig. 5 nach der Montage und
- Fig. 7: eine vierte Ausführungsform der erfindungsgemäßen Anordnung nach der Mon-tage.

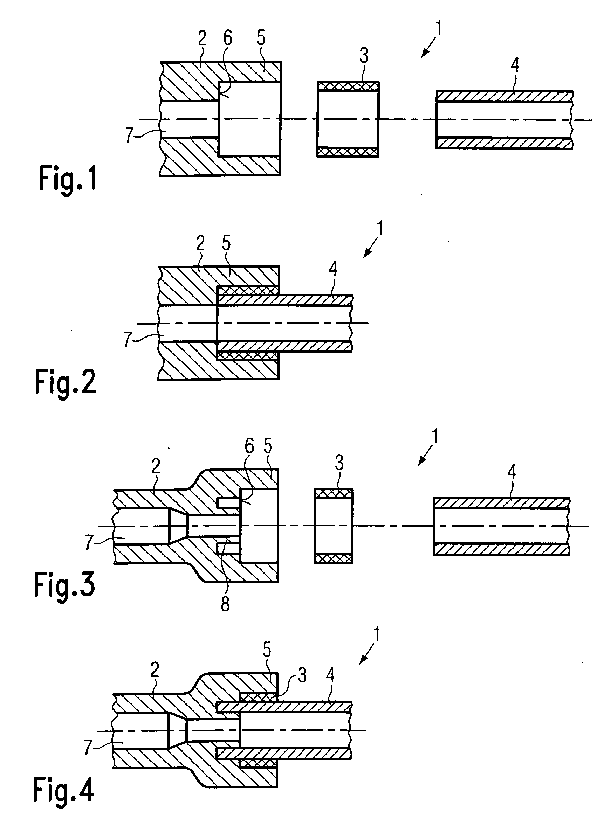

Fig. 1 ist die erfindungsgemäße Anordnung 1 in einer Schnittansicht vor der Montage, also vor dem Zusammensetzen, dargestellt. Im Einzelnen werden gezeigt: eine Kupplungseinrichtung 2, ein zylinderringförmiges Klebeelement 3 und ein rohrförmiges Element 4, das hier als starre Rohrleitung ausgebildet ist. Alternativ sind auch flexible Leitungen denkbar. Im vorliegenden Ausführungsbeispiel besteht die Kupplungseinrichtung 2 und das rohrförmige Element 4 aus Kunststoff, z. B. einem Polyolefin, wie z. B. Polypropylen. Alternativ sind auch andere Werkstoffe denkbar. Beispielsweise kann die Kupplungseinrichtung und/oder das rohrförmige Element aus Metall oder einem Elastomer bestehen. Ferner sind auch mehrschichtige Rohrleitungen oder Schläuche denkbar.

Das Klebestoff besteht aus einem wärmeaufschmelzbaren Kunststoff, der zu einem zylinderringförmigen Klebeelement verpresst ist. Das Klebeelement kann auch im Spritzgießverfahren oder durch Extrusion hergestellt sein. Alternativ kann das Klebeelement auch mehrteilig ausgebildet sein, z. B. aus zwei Halbschalen oder mehreren Segmenten. Ferner können Metallpartikel im Klebeelement vorhanden sein, um insbesondere eine induktive Erwärmung zu fördern. Anderweitig handelt es sich bei dem Klebstoff um im Stand der Technik gängigen wärmeaufschmelzbaren Klebstoff.

Das Klebeelement kann zudem auch elektrisch leitfähige Partikel aufweisen, durch die der Klebstoff elektrisch leitfähig ist. Darüber hinaus kann auch das Kupplungselement und die Rohrleitung elektrisch leitfähig ausgebildet sein, so dass die gesamte Anordnung elektrisch leitfähig ist.

Bei der ersten Ausführungsform verfügt die Kupplungseinrichtung 2 über einen rohrförmigen Abschnitt 5, an den sich ein radial erstreckender Anlageabschnitt 6 anfügt. Konzentrisch zum rohrförmigen Abschnitt ist darüber hinaus ein Leitungsabschnitt 7 vorgesehen, der in den Anlageabschnitt 6 mündet, so dass ein Fluid durch die Kupplungseinrichtung hindurch gefördert werden kann.

Der Innendurchmesser des rohrförmigen Abschnitts ist dabei so bemessen, dass er geringfügig größer als der Außendurchmesser des zylinderringförmigen Klebeelements ist. Dadurch können Kupplungseinrichtung und ein Klebeelement problemlos ineinander gesetzt werden. Weiterhin ist das rohrförmige Element derart gestaltet, dass sein Außendurchmesser geringfügig kleiner als der Innendurchmesser des Klebeelements ist, so dass auch das rohrförmige Element und das Klebeelement problemlos ineinander gesetzt werden können.

Im montierten Zustand, also wenn Kupplungseinrichtung, Klebeelement und rohrförmiges Element entsprechend Fig. 2 ineinandergesetzt sind, erfolgt in einem nächsten Schritt das Aufschmelzen des Klebeelements, so dass die Klebeverbindung zwischen dem rohrförmigen Element und der Kupplungseinrichtung hergestellt wird.

Nachfolgend wird die Wirkungs- und Funktionsweise der Erfindung näher erläutert:

Zunächst werden die Einzelteile, nämliche eine Kupplungseinrichtung, Klebeelement und rohrförmiges Element zusammengesetzt, wobei es unerheblich ist, ob zunächst das Klebeelement oder das rohrförmige Element in dem rohrförmigen Abschnitt der Kupplungseinrichtung eingebracht wird. Wenn erst das rohrförmige Element eingebracht werden soll, ist es günstig, wenn das Klebeelement mehrteilig ausgebildet ist, z. B. durch zwei Halbschalen. Im zusammengesetzten Zustand nimmt die Anordnung aus Kupplungseinrichtung, Klebeelement und rohrförmigen Element die in Fig. 2 dargestellte Konfiguration ein. In einem nächsten Schritt kann nunmehr dem Klebeelement Wärme zugeführt werden, so dass das Klebeelement aufschmilzt und eine Klebeverbindung zwischen dem rohrförmigen Element und der Kupplungseinrichtung herstellt. Da zwischen Klebeelement, Kupplungseinrichtung und rohrförmigen Element ein Spiel vorliegt, kann zunächst ein Ausrichten von dem rohrförmigen Element gegenüber der Kupplungseinrichtung durchgeführt werden. Auf diese Weise können Toleranzen ausgeglichen werden. So kann die Anordnung 1 vorkonfektioniert angeliefert werden und die Kupplungseinrichtung und das rohrförmige Element in ihre endgültige Einbaulage gebracht werden. Durch das nachträgliche Verkleben kann eine spannungsfreie Verbindung zwischen Kupplungseinrichtung und rohrförmigen Element sichergestellt werden.

Nachfolgend wird eine zweite Ausführungsform der Erfindung erläutert. Um Wiederholungen zu vermeiden, wird jedoch nur auf die Unterschiede zur ersten Ausführungsform hingewiesen. Insbesondere erhalten die gleichen Bauteile auch die gleichen Bezugszeichen.

Bei der zweiten Ausführungsform ist zusätzlich ein Kupplungsstutzen 8 vorgesehen, auf den das rohrförmige Element aufgeschoben wird. Der Kupplungsstutzen 8 wird durch eine im Anlageabschnitt 6 ausgebildete ringförmige Nut gebildet. Die Abmessungen der Nut können dabei so gewählt werden, dass sich das rohrförmige Element problemlos einstecken lässt. Der Zusammenbau und das Verkleben erfolgen anschließend in gleicher Weise wie bei der ersten Ausführungsform.

Nachfolgend wird die dritte Ausführungsform der Erfindung erläutert. Auch bei dieser Ausführungsform werden nur die Unterschiede zur ersten Ausführungsform aufgezeigt. Bei der dritten Ausführungsform ist das Klebeelement geringfügig anders gestaltet. Es verfügt zusätzlich über einen sich radial nach innen erstreckenden Abschnitt 9, mit dem das Klebeelement in Anlage mit dem Anlageabschnitt 6 der Kupplungseinrichtung 2 gebracht wird. Zusätzlich liegt das rohrförmige Element stirnseitig an dem radial nach innen sich erstreckenden Abschnitt 9 an. Auf diese Weise wird auch eine stirnseitige Verklebung des rohrförmigen Elements mit der Kupplungseinrichtung gewährleistet.

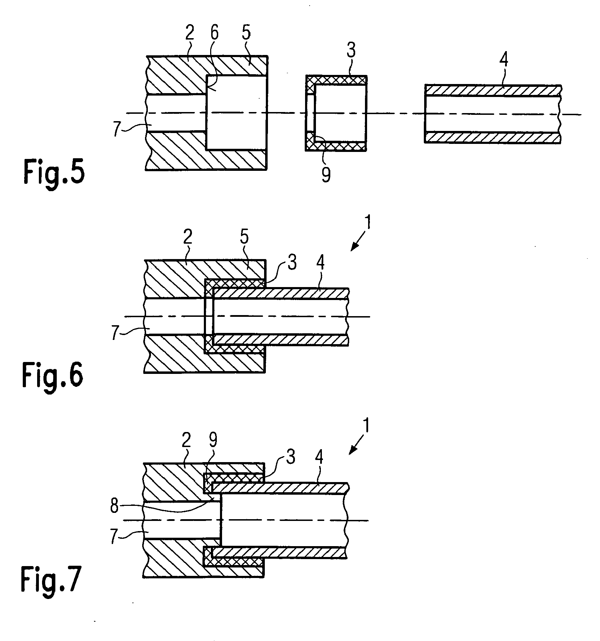

In Figur 7 ist zudem eine vierte Ausführungsform nach der Montage dargestellt. Auch dort sind die gleichen Bauteile mit den gleichen Bezugszeichen gekennzeichnet. Im Unterschied zur dritten Ausführungsform verfügt diese Ausführungsform zusätzlich über einen Kupplungsstutzen 8.

## Patentansprüche

1. Anordnung mit einem rohrförmigen Element, vorzugsweise einer Rohrleitung oder einem Schlauch, und einer Kupplungseinrichtung (2), die einen rohrförmigen Abschnitt (5) aufweist, dessen Innendurchmesser größer als der Außendurchmesser des rohrförmigen Elements ist, und bei der das rohrförmige Element abschnittsweise in dem rohrförmigen Abschnitt angeordnet ist, **dadurch gekennzeichnet, dass** zwischen dem rohrförmigen Element (4) und dem rohrförmigen Abschnitt (5) ein vorgefertigtes vorzugsweise ringförmiges Klebeelement (3) im Wesentlichen aus aufschmelzbaren Klebstoff angeordnet ist.

2. Anordnung nach Anspruch 1, **dadurch gekennzeichnet, dass** das Klebeelement aus gepresstem Klebstoff besteht.

3. Anordnung nach Anspruch 1 oder 2, **dadurch gekennzeichnet, dass** die Kupplungseinrichtung (2) einen sich im Wesentlichen radial erstreckenden Anlageabschnitt (6) aufweist, an dem das Klebeelement in Achsrichtung des rohrförmigen Abschnitts anliegt.

4. Anordnung nach einem der vorangegangenen Ansprüche, **dadurch gekennzeichnet, dass** der Innendurchmesser des rohrförmigen Abschnitts geringfügig größer als der Außendurchmesser des Klebeelements ist.

5. Anordnung nach einem der vorangegangenen Ansprüche, **dadurch gekennzeichnet, dass** der Innendurchmesser des Klebeelements geringfügig größer als der Außendurchmesser des rohrförmigen Elements ist.

6. Anordnung nach einem der vorangegangenen Ansprüche, **dadurch gekennzeichnet, dass** das Klebeelement im Wesentlichen zylinderringförmig ist.

7. Anordnung nach einem der vorangegangenen Ansprüche, **dadurch gekennzeichnet, dass** das rohrförmige Element im Wesentlichen konzentrisch zum rohrförmigen Abschnitt angeordnet ist.

8. Anordnung nach einem der vorangegangenen Ansprüche, **dadurch gekennzeichnet, dass** das Klebeelement einen sich zumindest abschnittsweise radial nach innen erstreckenden Abschnitt aufweist.

9. Anordnung nach einem der vorangegangenen Ansprüche, **dadurch gekennzeichnet, dass** das rohrförmige Element stirnseitig wenigstens abschnittsweise einen sich radial nach innen erstreckenden Abschnitt aufweist.

10. Anordnung nach einem der vorangegangenen Ansprüche, **dadurch gekennzeichnet, dass** das rohrförmige Element stirnseitig wenigstens abschnittsweise an dem sich radial nach innen erstreckenden Abschnitt anliegt.

11. Anordnung nach einem der vorangegangenen Ansprüche, **dadurch gekennzeichnet, dass** die Kupplungseinrichtung einen Kupplungsstutzen aufweist, der sich abschnittsweise in das rohrförmige Element hinein erstreckt.

12. Anordnung nach einem der vorangegangenen Ansprüche, **dadurch gekennzeichnet, dass** der Kupplungsstutzen durch eine sich in dem radial erstreckenden Abschnitt der Kupplungseinrichtung angeordnete ringförmig verlaufende Nut gebildet wird.

13. Anordnung nach einem der vorangegangenen Ansprüche, **dadurch gekennzeichnet, dass** die axiale Länge des Klebeelements geringer als die axiale Länge des ringförmigen Abschnitts ist.

14. Anordnung nach einem der vorangegangenen Ansprüche, **dadurch gekennzeichnet, dass** das Kupplungselement Kunststoff, vorzugsweise polymeren Kunststoff aufweisen.

15. Anordnung nach einem der vorangegangenen Ansprüche, **dadurch gekennzeichnet, dass** das rohrförmige Element Kunststoff, vorzugsweise polymeren Kunststoff aufweist.

16. Anordnung nach einem der vorangegangenen Ansprüche, **dadurch gekennzeichnet, dass** der Klebstoff elektrisch leitende Partikel aufweist.

17. Verfahren zum Herstellen einer Verbindung einer Anordnung nach einem der vorangegangenen Ansprüche bei dem zunächst das gepresste Klebeelement und das rohrförmige Element in den rohrförmigen Abschnitt eingebracht und anschließend der Klebstoff aufgeschmolzen wird.

18. Verfahren nach Anspruch 17, **dadurch gekennzeichnet, dass** das rohrförmige Element und die Kupplungseinrichtung vor dem Aufschmelzen des Klebstoffs zueinander ausgerichtet werden.

19. Verfahren nach Anspruch 17 oder 18, **dadurch gekennzeichnet, dass** während des Aufschmelzens des Kunststoffs das rohrförmige Element im Wesentlichen senkrecht nach oben ragt.

20. Verfahren nach einem der Ansprüche 17 bis 19, **dadurch gekennzeichnet, dass** vor dem Aufschmelzen des Klebeelements das rohrförmige Element auf den Kupplungsstutzen aufgesteckt wird.
